# EUROPÄISCHE PATENTSCHRIFT

(11) **EP 1 586 713 B1**
(45) Veröffentlichungstag und Bekanntmachung des Hinweises auf die Patenterteilung: **09.12.2009**
(21) Anmeldenummer: 04405231.4
(22) Anmeldetag: 15.04.2004
(51) Int. Cl.: E03D 5/10, G01F 23/26

(54) **Vorrichtung und Verfahren zur selbstständigen Spülauslösung einer Spülvorrichtung mittels eines kapazitiven Sensors**
Device and method for automatic iniciation of flushing of a flushing device using a capacitive sensor
Dispositif et méthode d'initiation automatique de rincage d'un dispositif de chasse d'eau utilisant un capteur capacitif

(43) Veröffentlichungstag der Anmeldung: 19.10.2005
(73) Patentinhaber: Geberit International AG, 8645 Jona (CH)
(72) Erfinder: Elsener, René, 8610 Uster (CH)
(74) Vertreter: Groner, Manfred

(56) Entgegenhaltungen:
- WO-A-02/50498
- DE-A- 3 228 061
- DE-A- 10 006 670
- DE-A- 10 111 210
- US-A- 669 037

## Beschreibung

Die Erfindung betrifft eine Vorrichtung zur selbsttätigen Spülauslösung einer Spülvorrichtung nach dem Oberbegriff des Anspruchs 1.

Die US 669 037 A offenbart ein Urinal mit einer automatischen Spülung. In einem Siphon ist ein Schwimmer angeordnet, der bei steigendem Niveau des im Siphon vorhandenen Wassers einen Stromkreis schliesst und damit eine Spülung auslöst. Nach einer Variante verschwenkt das Spülwasser einen Hebel, der den Stromkreis schliesst. Damit der Schwimmer angehoben wird, ist am Ausgang des Siphons eine Schwelle erforderlich.

Die WO 02/50498 A offenbart ein Verfahren und eine Vorrichtung zum Messen von Pegelständen. An einem Spülkasten ist aussenseitig ein kapazitiver Sensor angeordnet. Aufgrund der Pegelstandsmessung können das Einlaufventil und das Auslaufventil gesteuert werden. Eine automatische Spülauslösung ist nicht möglich und auch nicht vorgesehen.

Die DE 101 11 210 A offenbart ein Verfahren zur Steuerung der Spülung eines Urinals. Die Spülauslösung erfolgt durch eine Leitfähigkeitsmessung mit drei Elektroden.

Die selbsttätige Auslösung einer Spülung bei WC-Anlagen und Urinalen ist seit langem bekannt. Bei einer bekannten Vorrichtung wird mit Radar ein Benutzer festgestellt und eine Spülung ausgelöst, wenn sich dieser entfernt. Es sind auch Vorrichtungen bekannt, bei denen Änderungen im Siphon detektiert und diese zur Auslösung einer Spülung ausgewertet werden.

So offenbart beispielsweise die DE 32 28 061 A eine Vorrichtung zur Spülung einer WC-Anlage, bei welcher im Bereich des Siphons nach der Überlaufkante Elektroden angeordnet sind. Die Elektroden sind kapazitive Elektroden und lösen über ein Steuergerät eine Spülung aus, sobald sich das Dielektrikum des Kondensators im Siphon infolge einer Verunreinigung ändert. Der Spülvorgang wird bei einer bestimmten, einstellbaren Schwelle ausgelöst und nach einer vorwählbaren Verzögerungszeit wieder beendet. Die Elektroden sind an der Aussenoberfläche des Siphons angebracht, wodurch ein Korrodieren der Elektroden vermieden werden soll.

Eine Vorrichtung mit zwei im Inneren des Siphons angeordneten Elektroden ist aus der CH 491 257 bekannt geworden.

Die DE 199 50 874 A offenbart eine Urinal-Spüleinrichtung, bei welcher eine Sonde vorgesehen ist, die in einem vorstehenden Bereich des Urinals angeordnet ist. Die Sonde ist als Näherungssensor ausgebildet und weist eine Auswertelektronik auf, deren Ausgangssignal von der Kapazität der Sonde abhängig ist. Mit einem Ausgangssignal wird ein Magnetventil gesteuert. Zur Feststellung einer Verstopfung ist am Abflussrohr des Geruchverschlusses eine Sonde angeordnet, welche die Funktion eines Durchflusswächters erfüllt. Im Fall einer Verstopfung wird der Spülbetrieb unterbrochen.

Durch die DE 100 06 670 A ist eine Vorrichtung zum Auslösen eines Spülvorganges bekannt geworden, die wenigstens eine Elektrode aufweist, die unterhalb der Überlaufstelle des Siphons angeordnet ist. Findet ein Überlauf über die Überlaufkante des Siphons statt, so wird die innenliegende Oberfläche des Siphons benetzt, was eine Änderung der Kapazität bewirkt. Die Elektrode bzw. der Sensor spricht somit auf eine Benetzung der inneren Oberfläche des Siphons an. Bei Urinal-Siphons ist es in der Regel nicht zu vermeiden, dass sich an der genannten innenliegenden Oberfläche des Siphons Kalk ablagert, der vergleichsweise porös ist. In diese Ablagerungen nistet sich Wasser ein, welches nach einer Spülung längere Zeit an dieser Stelle verbleibt und Fehlsignale erzeugt.

Es wird vorgeschlagen, die Innenfläche des Siphons im Überlaufbereich wasserabweisend bzw. hydrophob auszubilden, um die genannten Fehlsignale zu vermeiden. Bei längerem Gebrauch lagern sich aber auch bei solchen Oberflächen schliesslich Ablagerungen an, welche das Dielektrikum des Kondensators ändern und Störsignale verursachen.

Der Erfindung liegt die Aufgabe zugrunde, eine Vorrichtung und ein Verfahren der genannten Art zu schaffen, welche eine grössere Funktionssicherheit gewährleistet, aber dennoch vergleichsweise kostengünstig realisiert werden kann.

Die Erfindung ist bei einer gattungsgemässen Vorrichtung gemäss Anspruch 1 gelöst. Bei der erfindungsgemässen Vorrichtung wird nicht eine Kapazitätsänderung infolge einer Benetzung der Innenfläche des Siphons, sondern die Kapazitätsänderung infolge einer Änderung des Wasserstandes im Siphon detektiert und entsprechend eine Spülung ausgelöst. Das Dielektrikum des Kondensators wird wesentlich durch das Sperrwasser und Ablagerungen gebildet. Der Anteil von Oberflächenwasser und Ablagerungen ist vergleichsweise klein.

Die Erfindung ermöglicht zudem eine Messung der Füllstandshöhe. Ist beispielsweise ein Siphon nicht bis zur Überlaufkante gefüllt, so kann über den Sensor eine solche unvollständige Füllung detektiert und eine Nachspülung ausgelöst werden. Der kapazitive Sensor misst im Bereich des Sperrwassers und im Luftbereich unmittelbar über dem Niveau des Sperrwassers. Die gemessene Kapazität ist gewissermassen eine Mischrechnung zwischen der Kapazität des Sperrwassers und des darüber liegenden Luftraumes. Verkalkungen an der Innenseite nach der Überlaufkante können die Messung dadurch weniger beeinflussen.

Eine noch zuverlässigere Spülauslösung ergibt sich dann, wenn der Sensor eine Guard-Elektrode aufweist, mit welcher Streufelder ausgeblendet werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine Vertikalansicht der erfindungsgemässen Vorrichtung,
- Figur 2: eine Ansicht der erfindungsgemässen Vorrichtung,
- Figur 3: ein Schnitt entlang der Linie III-III der Figur 2,
- Figur 4: ein Schnitt durch eine erfindungsgemässe Vorrichtung entlang der Linie IV-IV der Figur 1,
- Figur 5: schematisch der Verlauf der Feldlinien zwischen zwei Elektroden,
- Figur 6: ein Diagramm mit dem Verlauf des Sensorsignals bei zwei Spülauslösungen und
- Figur 7: ein Diagramm zur Illustration der Auswertung der Sensorsignale.

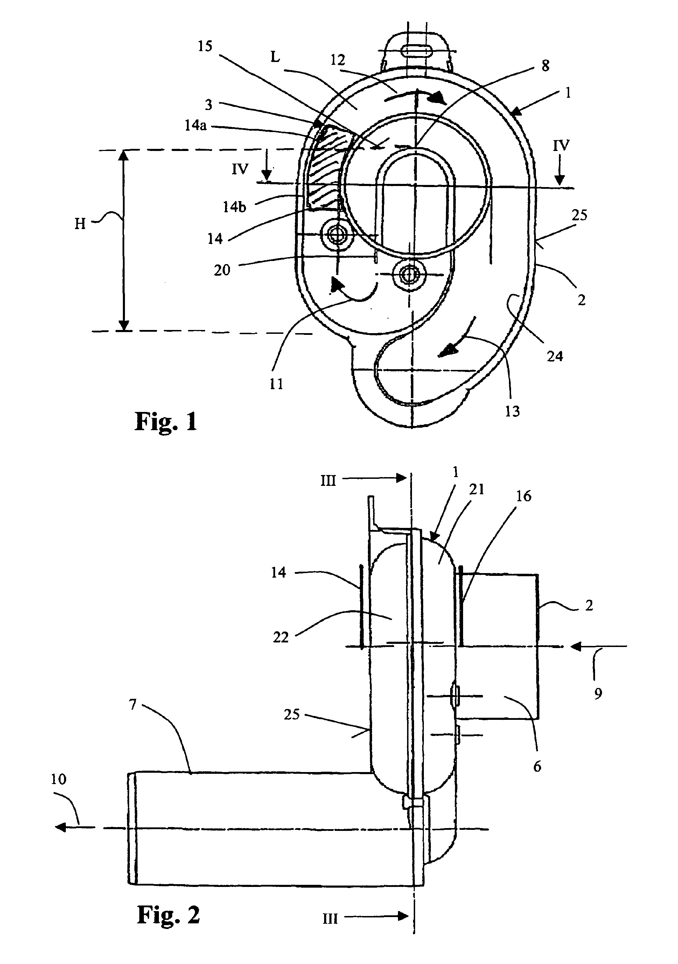

Die Figuren zeigen eine Vorrichtung 1, die insbesondere einen Urinal-Siphon mit einem Gehäuse 2 aufweist, das aus zwei miteinander verbundenen Gehäusehälften 21 und 22 besteht. An der Gehäusehälfte 21 ist ein Siphoneinlass 6 vorgesehen, in den in Richtung des Pfeiles 9 die abzuführende Flüssigkeit einströmt. Im Gehäuse 2 vorliegendes Sperrwasser S bildet einen Geruchverschluss vor einer Überlaufkante 8. Strömt aus einem hier nicht gezeigten Urinal-Becken Wasser durch den Siphoneinlass 6 in das Gehäuse 2, so steigt die in Figur 1 gezeigte Oberfläche 15 des Sperrwassers S an und fliesst unter einer Siphonwirkung in den Richtungen der Pfeile 12 und 13 zu einem Siphonauslass 7 und verlässt diesen gemäss Figur 2 in Richtung des Pfeiles 10 und strömt schliesslich in eine hier nicht gezeigte Entsorgungsleitung. Durch Spülwasser wird das Sperrwasser S wieder bis zur Überlaufkante 8 nachgefüllt. Dieses fliesst durch den Siphoneinlass 6 in das Gehäuse 2 und in Richtung des Pfeils 12 um eine Kante20.

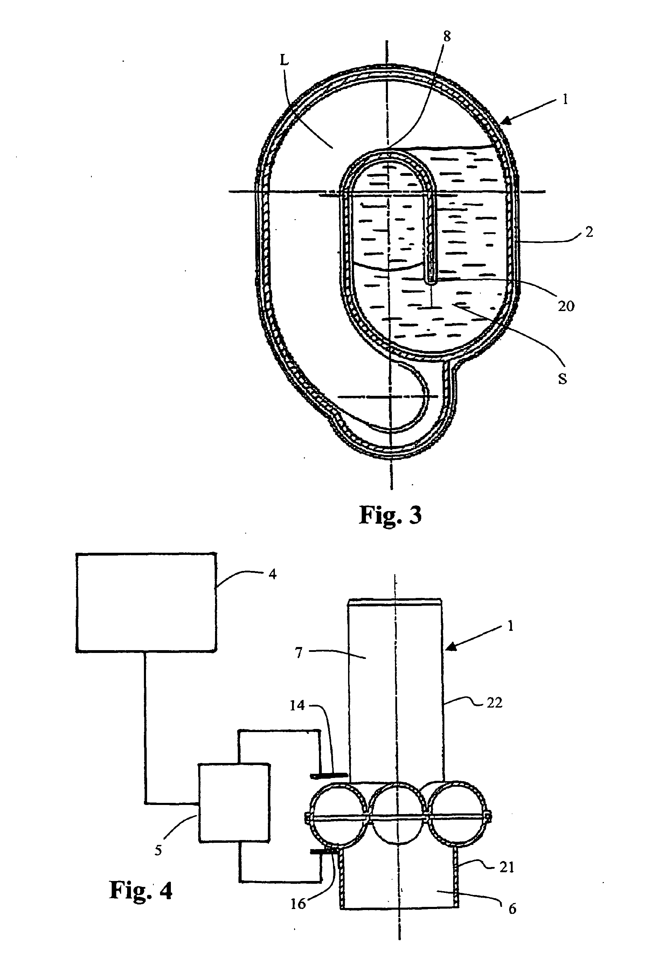

Zur selbsttätigen Auslösung einer Spülung ist ein Sensor 3 vorgesehen, der gemäss Figur 4 eine Elektronik 5 aufweist, welche zur Spülauslösung eine Spülvorrichtung 4 aktiviert. Die Spülvorrichtung 4 ist beispielsweise ein Spülkasten mit einem Magnetventil, das durch Signale geöffnet und geschlossen wird. Denkbar ist auch eine Spülung über eine andere Spülvorrichtung, beispielsweise einen Druckspüler mit einem entsprechenden ansteuerbaren Ventil.

Der Sensor 3 weist zwei Elektroden 14 und 16 auf, die gemäss den Figuren 2 und 4 an einer Aussenseite 25 des Gehäuses 2 angeordnet sind. Diese Elektroden 14 und 16 sind im Abstand zueinander gegenüber angeordnet und befinden sich in Strömungsrichtung gesehen vor der Überlaufkante 8, wobei sich jeweils ein Teil der Elektrode im Bereich des Sperrwasser S und ein Teil der Elektrode im Bereich eines Luftraumes L über dem Niveau 15 befindet. Für die Elektrode 14 sind diese beiden Bereiche in Figur 1 mit 14a und 14b bezeichnet. Das Dielektrikum des Sensors 3 wird teilweise durch Sperrwasser S und teilweise vom Luftraum L gebildet. Die gemessene Kapazität wird somit durch das Sperrwasser S sowie durch den Luftraum L bestimmt. Wird das Urinal benutzt, so steigt die Oberfläche 15 an und entsprechend nimmt der Einfluss des Luftraumes L auf die Kapazität ab. Sinkt die Oberfläche 15, so ändert sich entsprechend die Kapazität in der anderen Richtung. Die gemessene Kapazität ist ein Indikator für die in Figur 1 eingezeichnete Füllstandshöhe H. Mit steigender Oberfläche 15 steigt die Kapazität an und mit sinkender Oberfläche 15 nimmt entsprechend die Kapazität ab.

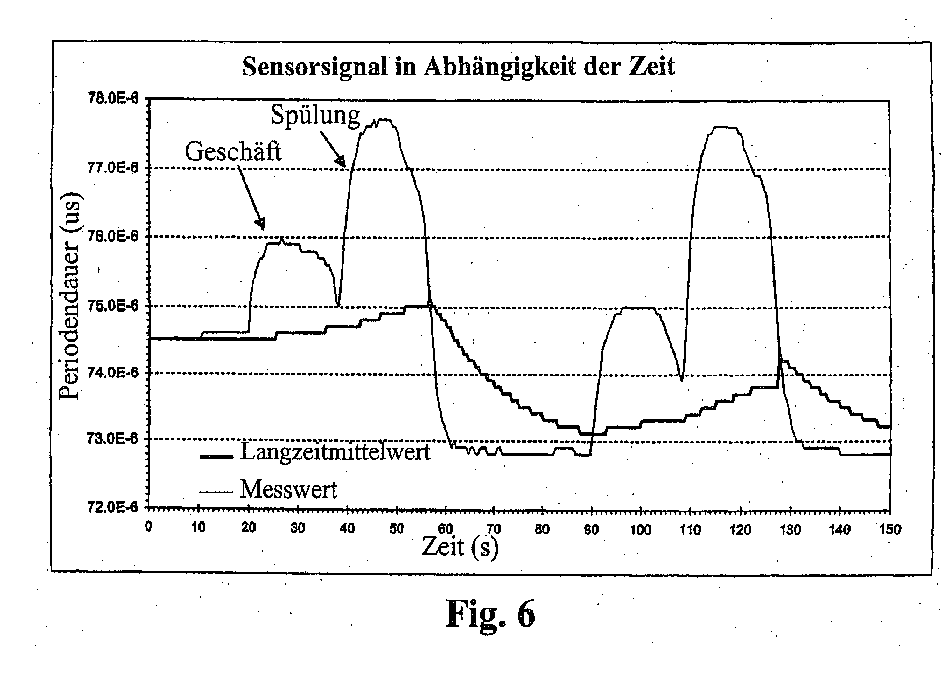

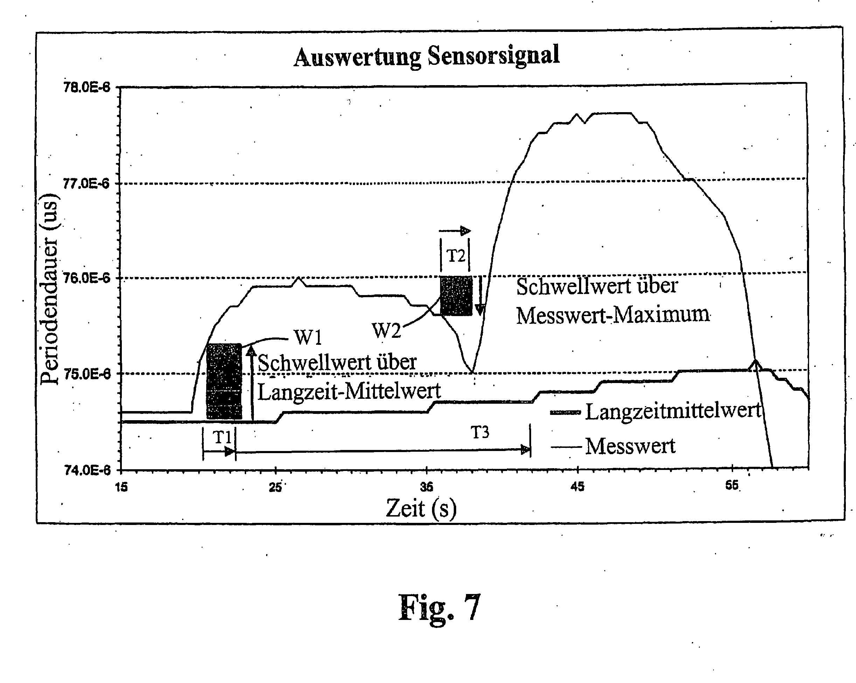

Die Kapazität wird vom Sensor 3 laufend gemessen. Aus den Messungen wird der in den Figuren 6 und 7 angegebene Langzeit-Mittelwert ermittelt. Wird während einer vorgegebenen Dauer das Langzeit-Mittel um einen vorbestimmten Schwellwert überschritten, so wird das Geschäft erkannt. Eine Spülung wird ausgelöst, sobald während einer vorgegebenen Dauer ein Maximalwert um einen Schwellwert unterschritten wird. Während der Spülung steigt die Kapazität stark an, nimmt dann aber durch das Entleeren ab und sinkt unter den Langzeit-Mittelwert. Durch das Nachfüllen von Sperrwasser S steigt die Kapazität wieder auf den Ausgangswert zurück.

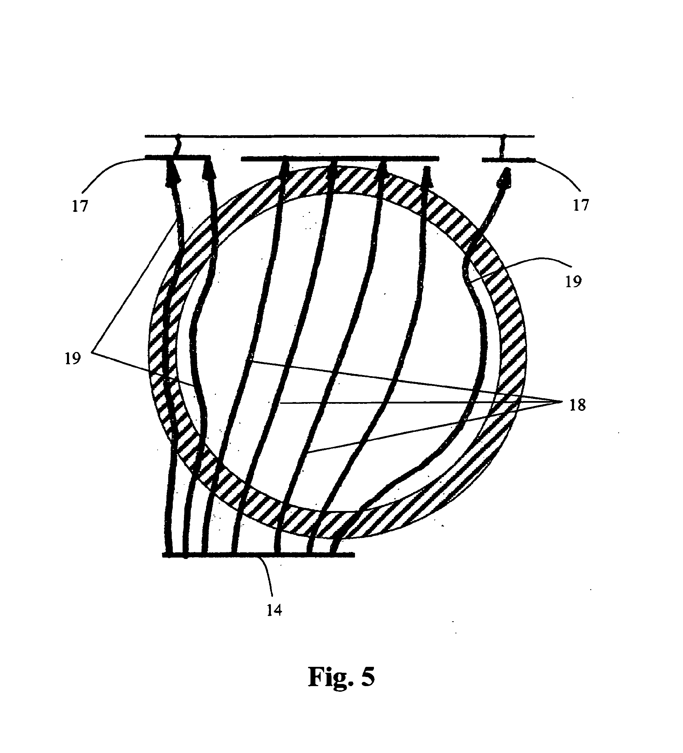

Die Figur 5 zeigt den Verlauf der Feldlinien 18 und 19 zwischen den Elektroden 14 und 16, die als Messelektroden ausgebildet sind. Die Feldlinien 19 verlaufen durch seitliche Wandungen des Gehäuses 2 und werden durch Ablagerungen sowie Oberflächenwasser beeinflusst und verlaufen deshalb nicht gradlinig, wie dies bei den Feldlinien 18 annähernd der Fall ist. Mit einer an sich bekannten Guard-Elektrode 17 werden Feldlinien 19 sowie allfällige Störfelder weitgehend ausgeblendet und bei der Messung deshalb nicht berücksichtigt. Deshalb kann die Funktionssicherheit auch bei langer Standzeit noch weiter erhöht werden. Die Messung erfolgt somit weitgehend aufgrund des nicht gestörten Feldes.

Der Verlauf eines Sensorsignals bei zwei nachfolgenden Benutzungen der erfindungsgemässen Vorrichtung 1 ist in Figur 6 gezeigt. Der Messwert steigt bei der Benutzung und entsprechendem Anstieg der Oberfläche 15 leicht an und sinkt dann wieder, steigt dann aber nach einer Spülauslösung wieder stark auf einen noch höheren Wert an. Bei einer Spülung ist der Siphon kurzzeitig im Wesentlichen vollständig mit Spülwasser gefüllt und entsprechend die Kapazität hoch. Nach dem Absaugen des Wassers sinkt die Füllstandshöhe und steigt dann bei einer möglichen Nachspülung des Beckens wieder an. Der Verlauf des Langzeit-Mittelwertes verändert sich entsprechend, wie die Figur 6 zeigt.

Ein Geschäft wird als solches erkannt, wenn der in Figur 7 gezeigte Schwellwert W1 über dem Langzeit-Mittelwert für eine Zeitdauer T1 überschritten wird. Wird während einer vorgegebenen Dauer das Langzeitmittel um einen Schwellwert überschritten, so wird das Geschäft erkannt. Wird während einer vorgegebenen Dauer der Maximalwert um einen Schwellwert unterschritten, so wird die Spülung ausgelöst. Eine Spülung wird nach dem Erkennen eines Geschäftes erst dann ausgelöst, wenn während einer vorgegebenen und einstellbaren Zeitdauer T2 ein Maximalwert um einen Schwellwert W2 unterschritten wird, oder eine vorgegebene Zeitdauer T3 verstrichen ist. Die Auslösung der Spülung erfolgt somit verzögert, wozu ein entsprechender Algorithmus vorgesehen ist. Wird unvollständig gespült und deshalb die vorgesehene Füllstandshöhe H nicht erreicht, so wird dies von der Elektronik erkannt, da die Kapazität entsprechend klein bleibt. Über die Elektronik 14 wird dann eine Nachspülung ausgelöst, welche das Siphongehäuse 2 entsprechend füllt.

### Bezugszeichenliste

- 1: Vorrichtung
- 2: Gehäuse
- 3: Sensor
- 4: Spülvorrichtung
- 5: Elektronikeinheit
- 6: Siphoneinlass
- 7: Siphonauslass
- 8: Überlaufkante
- 9: Pfeil
- 10: Pfeil
- 11: Pfeil
- 12: Pfeil
- 13: Pfeil
- 14: Elektrode
- 14a: Teil
- 14b: Teil
- 15: Oberfläche
- 16: Elektrode
- 17: Guarde
- 18: Feldlinien
- 19: Feldlinien
- 20: Kante
- 21: Gehäusehälfte
- 22: Gehäusehälfte
- 23: Gehäuse
- 24: Innenseite
- 25: Aussenseite
- H: Füllstandshöhe
- L: Luftraum
- S: Sperrwasser
- T1: Zeitdauer
- T2: Zeitdauer
- T3: Zeitdauer
- W1: Schwellwert
- W2: Schwellwert

## Patentansprüche

1. Vorrichtung zur selbsttätigen Spülauslösung einer Spülvorrichtung (4), mit einem Siphon (2), der einen Einlass (6) und einen Auslass (7) sowie eine Überlaufkante (8) und einen zur Überlaufkante (8) aufsteigenden Kanal aufweist, mit Mitteln (14, 16) zum Detektieren eines Anstiegs der Oberfläche (15) des Sperrwassers (S) im Siphon (2), **dadurch gekennzeichnet, dass** an der Aussenseite (25) des Siphons (2) ein kapazitiver Sensor (3) angeordnet ist, der wenigstens eine Elektrode (14, 16) aufweist, die in Strömungsrichtung gesehen vor der Überlaufkante (8) im Bereich der Oberfläche (15) des Sperrwassers (S) angeordnet ist, wobei die genannte Oberfläche (15) sich in dem zur Überlaufkante (8) aufsteigenden Kanal befindet.

2. Vorrichtung nach Anspruch 1, **dadurch gekennzeichnet, dass** Änderungen der Füllstandshöhe (H) ermittelt werden.

3. Vorrichtung nach Anspruch 1 oder 2, **dadurch gekennzeichnet, dass** der Sensor (3) zur Ablenkung von Störfeldern wenigstens eine Guard (17) aufweist.

4. Vorrichtung nach einem der Ansprüche 1 bis 3, **dadurch gekennzeichnet, dass** die wenigstens eine Elektrode (14, 16) einen Teil (14a) aufweist, der über der Oberfläche (15) des Sperrwassers (S) angeordnet ist und dass ein weiterer Teil (14b) der wenigstens einen Elektrode (14, 16) sich im Bereich des Sperrwassers (S) befindet.

5. Vorrichtung nach einem der Ansprüche 1 bis 4, **dadurch gekennzeichnet, dass** die wenigstens eine Elektrode (14, 16) an der Aussenseite (25) eines Siphongehäuses (2) angeordnet ist.

6. Verfahren zur selbsttätigen Spülauslösung einer Spülvorrichtung, mit einem Siphon (2) mit einem zu einer Überlaufkante (8) aufsteigenden Kanal und mit Mitteln (14, 16) zum Detektieren eines Anstiegs der Oberfläche (15) des Sperrwassers (S) im Siphon, wobei der Anstieg zur Spülauslösung ausgewertet wird, **dadurch gekennzeichnet, dass** ein kapazitiver Sensor (3) an der Aussenseite (25) des Siphons (2) sowie eine Auswertelektronik (16) vorgesehen sind, und dass Änderungen des Dielektrikums im Bereich der Oberfläche (15) des Sperrwassers (S) in Strömungsrichtung vor der Überlaufkante (8) ermittelt werden, wobei die genannte Oberfläche (15) sich in dem zur Überlaufkante (8) aufsteigenden Kanal befindet.

7. Verfahren nach Anspruch 6, **dadurch gekennzeichnet, dass** die Kapazität vom Sensor (3) laufend gemessen und aus den Messungen ein Langzeit-Mittelwert ermittelt wird, dass ein Geschäft erkannt wird, wenn während einer vorgegebenen Dauer das Langzeit-Mittel um einen vorbestimmten Schwellenwert überschritten wird und dass eine Spülung ausgelöst wird, sobald während einer vorgegebenen Dauer ein Maximalwert unterschritten wird.

## Claims

1. Device for automatically triggering a flushing device (4), having a siphon (2) which has an inlet (6) and an outlet (7) and also an overflow edge (8) and a channel which rises up to the overflow edge (8), and having means (14, 16) for detecting a rise in the surface (15) of the sealing water (S) in the siphon (2), **characterized in that** the outside (25) of the siphon (2) has arranged on it a capacitive sensor (3) which has at least one electrode (14, 16) which is arranged upstream of the overflow edge (8), as seen in the flow direction, in the region of the surface (15) of the sealing water (S), the aforementioned surface (15) being located in the channel which rises up to the overflow edge (8).

2. Device according to Claim 1, **characterized in that** changes are determined in the filling-level height (H).

3. Device according to Claim 1 or 2, **characterized in that** the sensor (3) has at least one guard electrode (17) for deflecting interference fields.

4. Device according to one of Claims 1 to 3, **characterized in that** the at least one electrode (14, 16) has a part (14a) which is arranged above the surface (15) of the sealing water (S), and **in that** a further part (14b) of the at least one electrode (14, 16) is located in the region of the sealing water (S).

5. Device according to one of Claims 1 to 4, **characterized in that** the at least one electrode (14, 16) is arranged on the outside (25) of a siphon housing (2).

6. Method of automatically triggering a flushing device, having a siphon (2) with a channel which rises up to an overflow edge (8), and having means (14, 16) for detecting a rise in the surface (15) of the sealing water (S) in the siphon, the rise being evaluated for the purpose of triggering flushing, **characterized in that** a capacitive sensor (3) is provided on the outside (25) of the siphon (2) and an evaluation electronics unit (16) is provided, and **in that** changes are determined in the dielectric in the region of the surface (15) of the sealing water (S) upstream of the overflow edge (8), as seen in the flow direction, the aforementioned surface (15) being located in the channel which rises up to the overflow edge (8).

7. Method according to Claim 6, **characterized in that** the capacitance of the sensor (3) is measured continuously and a long-term mean value is determined from the measurements, **in that** an excretion is detected when, during a predetermined period, the long-term average is exceeded by a predetermined threshold value, and **in that** flushing is triggered as soon as, during a predetermined period, a measured value falls below a maximum.

## Revendications

1. Dispositif d'initiation automatique de rinçage d'un dispositif de chasse d'eau (4), comprenant un siphon (2), qui présente une entrée (6) et une sortie (7) ainsi qu'un bord de débordement (8) et un canal montant vers le bord de débordement (8), avec des moyens (14, 16) pour détecter une augmentation de la surface (15) de l'eau de blocage (S) dans le siphon (2), **caractérisé en ce que** du côté extérieur (25) du siphon (2) est disposé un capteur capacitif (3) qui présente au moins une électrode (14, 16), qui est disposée, vu dans la direction d'écoulement, avant le bord de débordement (8) dans la région de la surface (15) de l'eau de blocage (S), ladite surface (15) se trouvant dans le canal montant vers le bord de débordement (8).

2. Dispositif selon la revendication 1, **caractérisé en ce que** l'on détecte des variations de la hauteur de niveau de remplissage (H).

3. Dispositif selon la revendication 1 ou 2, **caractérisé en ce que** le capteur (3) présente au moins une protection (17) pour dévier les champs parasites.

4. Dispositif selon l'une quelconque des revendications 1 à 3, **caractérisé en ce que** l'au moins une électrode (14, 16) présente une partie (14a) qui est disposée au-dessus de la surface (15) de l'eau de blocage (S) et **en ce qu'**une autre partie (14b) de l'au moins une électrode (14, 16) se trouve dans la région de l'eau de blocage (S).

5. Dispositif selon l'une quelconque des revendications 1 à 4, **caractérisé en ce que** l'au moins une électrode (14, 16) est disposée du côté extérieur (25) d'un boîtier de siphon (2).

6. Procédé d'initiation automatique de rinçage d'un dispositif de chasse d'eau, comprenant un siphon (2) avec un canal montant vers un bord de débordement (8) et avec des moyens (14, 16) pour détecter une montée de la surface (15) de l'eau de blocage (S) dans le siphon, la montée étant analysée en vue d'une initiation de rinçage, **caractérisé en ce que** l'on prévoit un capteur capacitif (3) sur le côté extérieur (25) du siphon (2) ainsi qu'une électronique d'analyse (16), et **en ce que** des variations de la constante diélectrique dans la région de la surface (15) de l'eau de blocage (S) dans la direction d'écoulement depuis le bord de débordement (8) sont détectées, ladite surface (15) se trouvant dans le canal montant vers le bord de débordement (8).

7. Procédé selon la revendication 6, **caractérisé en ce que** la capacité du capteur (3) est mesurée en continu et l'on détecte à partir des mesures une valeur moyenne de durée, **en ce que** l'on détecte si quelqu'un a fait ses besoins si, pendant une durée prédéterminée, la moyenne de durée est dépassée d'une valeur seuil prédéterminée, et **en ce qu'**un rinçage est initié dès que pendant une durée prédéterminée, une valeur maximale n'est pas atteinte.
